# FASCICULE DE BREVET EUROPEEN

(11) **EP 2 675 058 B1**
(45) Date de publication et mention de la délivrance du brevet: **08.07.2020**
(21) Numéro de dépôt: 13168393.0
(22) Date de dépôt: 17.05.2013
(51) Int. Cl.: H02P 25/04, H02P 27/02

(54) **Circuit d'alimentation de moteur asynchrone**
Versorgungskreislauf eines Asynchronmotors
Power supply circuit of an asynchronous motor

(30) Priorité: 21.05.2012 FR 1254618
(43) Date de publication de la demande: 18.12.2013
(73) Titulaire: Atlantic Industrie, 85000 La Roche sur Yon (FR)
(72) Inventeur: Bony, Yves, 85170 Dompierre sur Yon (FR)
(74) Mandataire: Cabinet Chaillot

(56) Documents cités:
- EP-A1- 0 054 446
- WO-A1-2010/133513
- JP-A- 2006 050 715
- US-A- 5 617 001

## Description

La présente invention concerne les systèmes comprenant un moteur à variation de vitesse et porte plus particulièrement sur un circuit d'alimentation de moteur asynchrone.

Les moteurs à variation de vitesse sont utilisés dans de nombreux systèmes, notamment dans les systèmes électroménagers et les systèmes de chauffage ou de climatisation, par exemple pour l'entraînement des ventilateurs.

Les moteurs à variation de vitesse les plus utilisés à l'heure actuelle sont les moteurs asynchrones, qui sont des moteurs à variation de vitesse bon marché.

Un objectif de maintien des coûts bas pour des systèmes à moteur à variation de vitesse impose donc d'une part l'utilisation d'un moteur asynchrone et d'autre part un asservissement de la vitesse du moteur asynchrone par découpage.

Avec une configuration typique de circuit d'alimentation de moteur asynchrone à asservissement de vitesse par découpage par un élément de commutation de type triac, on constate cependant que, par exemple dans un appareil de ventilation tangentielle pour climatiseurs, les variations rapides de courant lors de la commutation de l'élément de commutation induisent des courants de Foucault dans les tôles métalliques qui constituent l'enveloppe de l'appareil. Ces courants de Foucault provoquent une mise en résonance audible de ces tôles, désagréable pour l'utilisateur en mode silence de l'appareil. En effet, en mode de fonctionnement de chauffage/climatisation, le bruit aéraulique de l'appareil couvre le bruit provoqué par les courants de Foucault.

Il existe donc un besoin pour un circuit d'alimentation de moteur asynchrone permettant de limiter les courants de Foucault générés lors de la commutation de l'élément de commutation.

US 5 617 001 A décrit un principe de démarrage de moteur.

JP 2006050715 A décrit un principe de commande de moteur à plusieurs vitesses.

EP 0054446 A1 décrit un circuit de commande de moteur électrique asynchrone.

L'invention a donc pour objet un circuit d'alimentation de moteur asynchrone comprenant une partie principale avec un enroulement principal et une partie auxiliaire avec enroulement auxiliaire, l'une des deux parties comprenant un élément de déphasage de courant, le circuit d'alimentation comprenant :
- une source de tension alternative d'entrée, alimentant le moteur asynchrone ;
- un circuit de découpage alimenté par la source de tension alternative d'entrée et comprenant un élément de commutation et un ou plusieurs composants de commande de l'élément de commutation, le circuit de découpage présentant une borne d'entrée de découpage connectée à une borne du moteur asynchrone pour découper le courant traversant la partie principale, la partie auxiliaire ou les deux parties du moteur asynchrone ;
caractérisé par le fait qu'un condensateur d'abaissement de tension est inséré en série entre la source de tension alternative d'entrée et le moteur asynchrone.

La vitesse du moteur asynchrone est linéairement proportionnelle à la tension efficace qui lui est appliquée. Le condensateur série inséré entre la source de tension alternative et le moteur asynchrone permet, plutôt que d'utiliser le moteur asynchrone avec une variation de commande de phase de 0 à un pourcentage inférieur à 100% pour une tension d'alimentation normale du secteur, d'utiliser le moteur avec une variation de commande de phase de 0 à 100% sous une tension d'alimentation réduite.

Ainsi, si l'on prend comme exemple un moteur asynchrone ayant une vitesse de 1000 tr/min sous 230V rms que l'on a besoin d'utiliser au maximum à 650 tr/min, avec l'état de la technique, on l'utilisait avec une tension d'alimentation de 230 V rms et une variation de commande de phase de 0 à 65%.

Avec le condensateur inséré en série entre la source de tension alternative et le moteur asynchrone selon la présente invention, on utilise le moteur asynchrone sous une tension d'alimentation réduite, avec une variation de commande de phase de 0 à 100%.

Dans la présente invention, on alimente par l'intermédiaire du condensateur inséré le moteur asynchrone sous une tension d'alimentation réduite, avec une variation de commande de phase de 0 à 100% pour obtenir la même valeur efficace de tension d'alimentation, donc la même vitesse de moteur.

La tension de crête avec laquelle on alimente le moteur asynchrone étant plus faible, la tension aux bornes du moteur asynchrone est plus faible dans la présente invention, ce qui induit un courant découpé plus faible, moins de variations de courants à la commutation, des courants de Foucault atténués et donc moins de bruit en mode silence.

Selon un premier mode de réalisation particulier de l'invention, la borne d'entrée de découpage du circuit de découpage peut être connectée à la sortie de la partie principale du moteur asynchrone. L'élément de commutation découpe alors le courant traversant l'enroulement principal du moteur asynchrone.

Selon un deuxième mode de réalisation particulier de l'invention, la borne d'entrée de découpage du circuit de découpage peut être connectée à la sortie de la partie auxiliaire du moteur asynchrone. L'élément de commutation découpe alors le courant traversant l'enroulement auxiliaire du moteur asynchrone.

Ainsi, pour les première et deuxième caractéristiques particulières de l'invention, l'un des deux enroulements du moteur asynchrone reste alimenté par la source de tension d'alimentation et le courant traversant cet enroulement n'est pas découpé par l'élément de commutation du circuit de découpage.

Il y a donc moins de courant découpé par l'élément de commutation, ce qui permet de réduire encore les courants de Foucault générés lors de la commutation de l'élément de commutation.

Selon un autre mode de réalisation particulier de l'invention, la borne d'entrée de découpage du circuit de découpage peut être connectée en sortie du moteur asynchrone, pour découper la somme des courants traversant la partie principale et la partie auxiliaire du moteur asynchrone. L'élément de commutation découpe alors la somme des courants traversant l'enroulement principal et l'enroulement auxiliaire du moteur asynchrone.

Selon une autre caractéristique particulière du premier mode de réalisation de l'invention, une résistance de dissipation peut être connectée en parallèle de l'enroulement principal ou de la partie principale.

Selon une autre caractéristique particulière du deuxième mode de réalisation de l'invention, une résistance de dissipation peut être connectée en parallèle de l'enroulement auxiliaire ou de la partie auxiliaire.

Ainsi, du fait du déphasage courant/tension lors du blocage de l'élément de commutation, l'énergie restant dans l'enroulement dont le courant est découpé est évacuée par effet joule sur la résistance de dissipation connectée en parallèle de l'enroulement.

L'élément de commutation peut être un triac ou un relais.

L'élément de commutation peut être commandé par un unique composant de commande constitué par un microcontrôleur. Le microcontrôleur gère alors l'instant de commande d'angle de phase pour la commutation de l'élément de commutation, la contre-réaction d'asservissement de vitesse, etc.

Les composants de commande de l'élément de commutation peuvent aussi être constitués par un circuit composé d'une résistance, d'un potentiomètre en série avec la résistance, d'un condensateur en série avec le potentiomètre et d'un diac dont une borne est connectée entre le potentiomètre et le condensateur et dont l'autre borne est connectée à la gâchette du triac, la résistance, le potentiomètre et le condensateur étant connectés entre le condensateur d'abaissement de tension et la masse.

En conjuguant les trois caractéristiques (diminution de tension d'alimentation par le condensateur d'abaissement de tension série inséré, découpage uniquement du courant de l'enroulement principal ou auxiliaire et ajout d'une résistance de dissipation aux bornes de l'enroulement dont on découpe le courant), on observe une diminution sensible du bruit du moteur asynchrone en mode silence. Ces trois caractéristiques ont chacune pour effet de diminuer les courants dans le circuit d'alimentation, susceptibles de générer des courants de Foucault lors de la commutation de l'élément de commutation du circuit de découpage.

L'invention a également pour objet un appareil comprenant un moteur asynchrone, caractérisé par le fait que ledit moteur asynchrone est alimenté par un circuit d'alimentation de moteur asynchrone tel que défini ci-dessus.

Pour mieux illustrer l'objet de la présente invention, on en décrit ci-après un mode de réalisation particulier, en référence au dessin annexé.

Sur ce dessin :

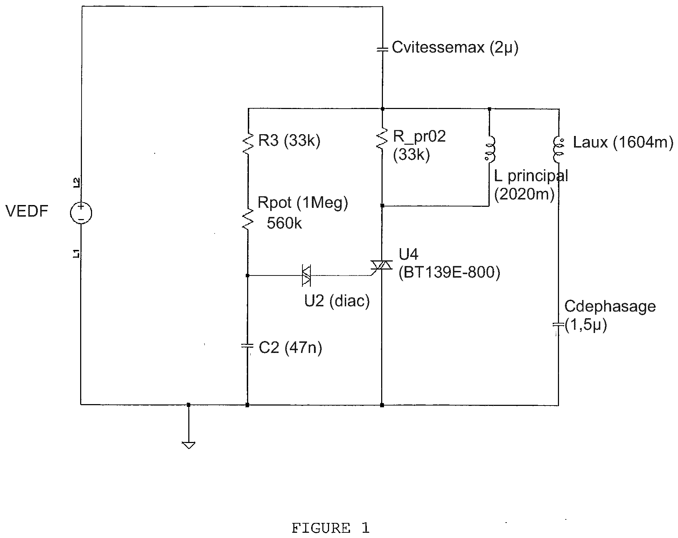

- la Figure 1 est un schéma de circuit d'un mode de réalisation du circuit d'alimentation d'un moteur asynchrone selon l'invention.

On décrit ci-après un mode de réalisation analogique de l'invention, à titre d'exemple non limitatif, en liaison avec la Figure 1.

Sur la Figure 1, le schéma de circuit comprend un montage de commande d'un Triac U4, le moteur asynchrone et un étage de réduction de tension d'alimentation du moteur asynchrone.

Le montage de commande du Triac U4 comprend une résistance R3 connectée en série avec un potentiomètre Rpot et un condensateur C2 relié à la masse, et un diac U2 dont une borne est connectée entre le potentiomètre Rpot et le condensateur C2 et l'autre borne est connectée à la gâchette du Triac U4.

Le moteur asynchrone comprend une partie principale avec un enroulement principal Lprincipal et une partie auxiliaire avec un enroulement auxiliaire Laux en série avec un condensateur de déphasage Cdephasage relié à la masse, permettant de déphaser le courant traversant l'enroulement auxiliaire Laux par rapport à celui traversant l'enroulement principal Lprincipal.

Une résistance de dissipation R_pr02 est connectée en parallèle de l'enroulement principal Lp. Son rôle sera décrit plus en détail ci-après.

L'étage de réduction de tension est constitué par le condensateur d'abaissement de tension Cvitessemax.

Une borne du condensateur d'abaissement de tension Cvitessemax est connectée à l'entrée d'une source de tension alternative d'entrée VEDF, l'autre borne du condensateur d'abaissement de tension Cvitessemax est connectée à la résistance R3, à la résistance de dissipation R_pr02, à l'entrée de l'enroulement principal Lprincipal et à l'entrée de l'enroulement auxiliaire Laux.

Une borne du Triac U4 est connectée à la sortie de l'enroulement principal Lprincipal et à la résistance de dissipation R_pr02, l'autre borne du Triac U4 est connectée à la masse.

La source de tension d'alimentation du secteur VEDF alimente le condensateur d'abaissement de tension Cvitessemax.

Le Triac U4 découpe le courant issu de l'enroulement principal Lprincipal du moteur asynchrone.

Le condensateur d'abaissement de tension Cvitessemax permet de réduire la tension d'alimentation du moteur asynchrone.

Le potentiomètre Rpot permet de commander l'angle de phase du moteur asynchrone.

La tension d'alimentation réduite et la commande de l'angle de phase permettent d'ajuster la valeur de tension efficace appliquée au moteur asynchrone, donc sa vitesse.

Afin de limiter les variations rapides de courant lors du blocage du Triac U4, on branche l'enroulement auxiliaire Laux et le condensateur de déphasage Cdephasage directement sur l'alimentation abaissée par le condensateur d'abaissement de tension Cvitessemax. L'enroulement auxiliaire Laux étant en permanence connecté à l'alimentation, elle réalise en permanence un champ alternatif déphasé sans discontinuité.

La résistance de dissipation R_pr02, en parallèle de l'enroulement principal Lprincipal, permet quant à elle de limiter les variations de courant au blocage du Triac U4, par exploitation du déphasage courant/tension lors du blocage du Triac U4. La résistance de dissipation R_pr02 permet alors d'évacuer par effet joule l'énergie restant dans de dissipation Lprincipal.

Comme indiqué, on envisage également dans le cadre de la présente invention une mise en œuvre par électronique numérique. Par exemple, un microcontrôleur pourrait remplacer les composants R3, Rpot, U2 et C2 en attaque de la gâchette du Triac U4, les autres composants du circuit restant identiques.

On pourrait également, sans s'écarter de la portée de la présente invention, inverser les branches du moteur asynchrone et découper le courant traversant la branche auxiliaire (enroulement auxiliaire Laux et condensateur Cdephasage), la branche principale étant elle reliée à la masse du circuit.

A titre indicatif, les valeurs des composants sur le schéma de circuit de la Figure 1, sont les suivantes :
VEDF : 230 V AC
Cvitessemax : 2pF
R3 : 33 kΩ
Rpot : 1 MΩ (réglé à 560kΩ sur le schéma)
C2 : 47nF
R_pr02 : 33kΩ
Cdephasage : 1,5µF

Le moteur asynchrone utilisé est, par exemple, un moteur fabriqué par la société Welling sous la référence RPG5BEP0069 ou un moteur fabriqué par la société Galanz sous la référence GAL010H40720-K02, atteignant 1000tr/min sous 230V rms.

## Revendications

1. Circuit d'alimentation de moteur asynchrone comprenant une partie principale avec un enroulement principal (Lprincipal) et une partie auxiliaire avec enroulement auxiliaire (Laux), l'une des deux parties comprenant un élément de déphasage de courant (Cdephasage), le circuit d'alimentation comprenant :
- une source de tension alternative d'entrée, alimentant le moteur asynchrone ;
- un circuit de découpage alimenté par la source de tension alternative d'entrée et comprenant un élément de commutation (U4) et un ou plusieurs composants de commande de l'élément de commutation (U4), le circuit de découpage présentant une borne d'entrée de découpage connectée à une borne du moteur asynchrone pour découper le courant traversant la partie principale, la partie auxiliaire ou les deux parties du moteur asynchrone ;
**caractérisé par le fait qu'**un condensateur d'abaissement de tension (Cvitessemax) est inséré en série entre la source de tension alternative d'entrée et le moteur asynchrone.

2. Circuit d'alimentation de moteur asynchrone selon la revendication 1, **caractérisé par le fait que** la borne d'entrée de découpage du circuit de découpage est connectée à la sortie de la partie principale du moteur asynchrone.

3. Circuit d'alimentation de moteur asynchrone selon la revendication 1, **caractérisé par le fait que** la borne d'entrée de découpage du circuit de découpage est connectée à la sortie de la partie auxiliaire du moteur asynchrone.

4. Circuit d'alimentation de moteur asynchrone selon la revendication 1, **caractérisé par le fait que** la borne d'entrée de découpage du circuit de découpage est connectée en sortie du moteur asynchrone, pour découper la somme des courants traversant la partie principale et la partie auxiliaire du moteur asynchrone.

5. Circuit d'alimentation de moteur asynchrone selon la revendication 2, **caractérisé par le fait qu'**une résistance de dissipation (Rpr02) est connectée en parallèle de l'enroulement principal (Lprincipal).

6. Circuit d'alimentation de moteur asynchrone selon la revendication 3, **caractérisé par le fait qu'**une résistance de dissipation est connectée en parallèle de l'enroulement auxiliaire (Laux).

7. Circuit d'alimentation de moteur asynchrone selon l'une des revendications 1 à 6, **caractérisé par le fait que** l'élément de commutation (U4) est un triac.

8. Circuit d'alimentation de moteur asynchrone selon l'une des revendications 1 à 7, **caractérisé par le fait que** l'élément de commutation (U4) est commandé par un unique composant de commande constitué par un microcontrôleur.

9. Circuit d'alimentation de moteur asynchrone selon l'une des revendications 1 à 7, **caractérisé par le fait que** les composants de commande de l'élément de commutation (U4) sont constitués par un circuit composé d'une résistance (R3), d'un potentiomètre (Rpot) en série avec la résistance (R3), d'un condensateur (C2) en série avec le potentiomètre (Rpot) et d'un diac (U2) dont une borne est connectée entre le potentiomètre (Rpot) et le condensateur (C2) et dont l'autre borne est connectée à la gâchette du triac (U4), la résistance (R3), le potentiomètre (Rpot) et le condensateur (C2) étant connectés entre le condensateur d'abaissement de tension (Cvitessemax) et la masse.

10. Appareil comprenant un moteur asynchrone, **caractérisé par le fait que** ledit moteur asynchrone est alimenté par un circuit d'alimentation de moteur asynchrone selon l'une des revendications 1 à 9.

## Patentansprüche

1. Asynchronmotor-Versorgungsstromkreis, umfassend einen Hauptabschnitt mit einer Hauptwicklung (Lprincipal) und einem Hilfsabschnitt mit einer Hilfswicklung (Laux), wobei einer der beiden Abschnitte ein Stromphasenverschiebungselement (Cdephasage) umfasst, wobei der Versorgungsstromkreis Folgendes umfasst:
- eine Eingangswechselspannungsquelle, die den Asynchronmotor versorgt;
- einen Schaltstromkreis, der von der Eingangswechselspannungsquelle versorgt wird und ein Schaltelement (U4) und eine oder mehrere Steuerkomponenten des Schaltelements (U4) umfasst, wobei der Schaltstromkreis eine Schalteingangsklemme aufweist, die an eine Klemme des Asynchronmotors angeschlossen ist, um den Strom abzuschneiden, der durch den Hauptabschnitt, den Hilfsabschnitt oder die beiden Abschnitte des Asynchronmotors geht;
**dadurch gekennzeichnet, dass** ein spannungsherabsetzender Kondensator (Cvitessemax) zwischen der Eingangswechselspannungsquelle und dem Asynchronmotor in Reihe eingefügt ist.

2. Asynchronmotor-Versorgungsstromkreis nach Anspruch 1, **dadurch gekennzeichnet, dass** die Schalteingangsklemme des Schaltstromkreises an den Ausgang des Hauptabschnitts des Asynchronmotors angeschlossen ist.

3. Asynchronmotor-Versorgungsstromkreis nach Anspruch 1, **dadurch gekennzeichnet, dass** die Schalteingangsklemme des Schaltstromkreises an den Ausgang des Hilfsabschnitts des Asynchronmotors angeschlossen ist.

4. Asynchronmotor-Versorgungsstromkreis nach Anspruch 1, **dadurch gekennzeichnet, dass** die Schalteingangsklemme des Schaltstromkreises mit dem Ausgang des Asynchronmotors geschaltet ist, um die Summe der Ströme, die durch den Hauptabschnitt und den Hilfsabschnitt des Asynchronmotors gehen, abzuschneiden.

5. Asynchronmotor-Versorgungsstromkreis nach Anspruch 2, **dadurch gekennzeichnet, dass** ein Ableitungswiderstand (Rpr02) zur Hauptwicklung (Lprincipal) parallel geschaltet ist.

6. Asynchronmotor-Versorgungsstromkreis nach Anspruch 3, **dadurch gekennzeichnet, dass** ein Ableitungswiderstand zur Hilfswicklung (Laux) parallel geschaltet ist.

7. Asynchronmotor-Versorgungsstromkreis nach einem der Ansprüche 1 bis 6, **dadurch gekennzeichnet, dass** das Schaltelement (U4) ein Triac ist.

8. Asynchronmotor-Versorgungsstromkreis nach einem der Ansprüche 1 bis 7, **dadurch gekennzeichnet, dass** das Schaltelement (U4) durch eine einzige Steuerkomponente gesteuert wird, die ein Mikrocontroller ist.

9. Asynchronmotor-Versorgungsstromkreis nach einem der Ansprüche 1 bis 7, **dadurch gekennzeichnet, dass** die Steuerkomponenten des Schaltelements (U4) ein Schaltkreis sind, der aus einem Widerstand (R3), einem Potentiometer (Rpot) in Reihe mit dem Widerstand (R3), einem Kondensator (C2) in Reihe mit dem Potentiometer (Rpot) und einem Diac (U2), dessen eine Klemme zwischen dem Potentiometer (Rpot) und dem Kondensator (C2) angeschlossen ist, und dessen andere Klemme an das Gate des Triac (U4) angeschlossen ist, besteht, wobei der Widerstand (R3), das Potentiometer (Rpot) und der Kondensator (C2) zwischen dem spannungsherabsetzenden Kondensator (Cvitessemax) und Masse angeschlossen sind.

10. Gerät, umfassend einen Asynchronmotor, **dadurch gekennzeichnet, dass** der Asynchronmotor von einem Asynchronmotor-Versorgungsstromkreis nach einem der Ansprüche 1 bis 9 versorgt wird.

## Claims

1. A power supply circuit of an asynchronous motor, comprising a main part with a main winding (Lprincipal) and an auxiliary part with an auxiliary winding (Laux), one of the two parts comprising a current phase shift element (Cdephasage), the power supply circuit comprising:
- an input alternating voltage source, supplying power to the asynchronous motor;
- a chopping circuit power supplied by the input alternating voltage source and comprising a switching element (U4) and one or several control components of the switching element (U4), the chopping circuit having a chopping input terminal connected to a terminal of the asynchronous motor to chop the current passing through the main part, the auxiliary part or both parts of the asynchronous motor;
**characterized in that** a voltage lowering capacitor (Cvitessemax) is inserted in series between the input alternating voltage source and the asynchronous motor.

2. The power supply circuit of an asynchronous motor according to claim 1, **characterized in that** the chopping input terminal of the chopping circuit is connected to the output of the main part of the asynchronous motor.

3. The power supply circuit of an asynchronous motor according to claim 1, **characterized in that** the chopping input terminal of the chopping circuit is connected to the output of the auxiliary part of the asynchronous motor.

4. The power supply circuit of an asynchronous motor according to claim 1, **characterized in that** the chopping input terminal of the chopping circuit is connected to the output of the asynchronous motor, to chop the sum of the currents passing through the main part and the auxiliary part of the asynchronous motor.

5. The power supply circuit of an asynchronous motor according to claim 2, **characterized in that** a dissipating resistance (Rpr02) is connected in parallel with the main winding (Lprincipal).

6. The power supply circuit of an asynchronous motor according to claim 3, **characterized in that** a dissipating resistance is connected in parallel with the auxiliary winding (Laux).

7. The power supply circuit of an asynchronous motor according to one of claims 1 to 6, **characterized in that** the switching element (U4) is a triac.

8. The power supply circuit of an asynchronous motor according to one of claims 1 to 7, **characterized in that** the switching element (U4) is controlled by a single control component made up of a microcontroller.

9. The power supply circuit of an asynchronous motor according to one of claims 1 to 7, **characterized in that** the control components of the switching element (U4) are made up of a circuit composed of a resistance (R3), a potentiometer (Rpot) in series with the resistance (R3), a capacitor (C2) in series with the potentiometer (Rpot) and a diac (U2) one terminal of which is connected between the potentiometer (Rpot) and the capacitor (C2) and the other terminal of which is connected to the gate of the triac (U4), the resistance (R3), the potentiometer (Rpot) and the capacitor (C2) being connected between the voltage lowering capacitor (Cvitessemax) and the ground.

10. A device comprising an asynchronous motor, **characterized in that** said asynchronous motor is supplied by a power supply circuit for an asynchronous motor according to one of claims 1 to 9.
